# EUROPÄISCHE PATENTSCHRIFT

(11) **EP 2 829 831 B1**
(45) Veröffentlichungstag und Bekanntmachung des Hinweises auf die Patenterteilung: **26.12.2018**
(21) Anmeldenummer: 13177607.2
(22) Anmeldetag: 23.07.2013
(51) Int. Cl.: F27B 17/02, A61C 13/20, F27D 19/00, F27D 21/00

(54) **Verfahren zur Bestimmung der Feuchtigkeit in einem Dentalofen und Dentalofen**
Method for determination of the moisture level in a dental kiln and dental kiln
Procédé de détermination de l'humidité dans un four dentaire et four dentaire

(43) Veröffentlichungstag der Anmeldung: 28.01.2015
(73) Patentinhaber: Ivoclar Vivadent AG, 9494 Schaan (LI)
(72) Erfinder: Jussel, Rudolf, 6805 Feldkirch-Gisingen (AT); Pauler, Markus, 6800 Feldkirch (AT)
(74) Vertreter: Baronetzky, Klaus

(56) Entgegenhaltungen:
- EP-A1- 2 550 928
- DE-A1-102006 032 655
- DE-C1- 19 606 493
- US-A1- 2011 114 626

## Beschreibung

Die Erfindung betrifft ein Verfahren zur Bestimmung der Feuchtigkeit in einem Dentalofen gemäß dem Oberbegriff von Anspruch1, sowie einen Dentalofen gemäß dem Oberbegriff von Anspruch 12.

Ein derartiges Verfahren ist beispielsweise aus der GB 332,194 bekannt. Bei einem derartigen Verfahren wird das Dentalrestaurationsteil auf Temperaturen zwischen 370 und 480°C aufgeheizt, und es wird ein kalter Spiegel in die Nähe gehalten, um festzustellen, zu welchem Zeitpunkt kein Dampf mehr aus dem Dentalrestaurationsteil aufsteigt.

Das Ergebnis dieser visuellen Überprüfung wird verwendet, um zu gewährleisten, dass lediglich ein trockenes Dentalrestaurationsteil tatsächlich gebrannt wird.

Alternativ kann das Dentalrestaurationsteil auch für drei Stunden bei 150°C belassen werden, wenn keine Eilbedürftigkeit besteht.

Eine derartige Lösung hängt sehr von der fachmännischen Erfahrung des Zahntechnikers ab, und ist zudem gegebenenfalls sehr zeitaufwendig.

Aus der Druckschrift EP 2 550 928 A1 ist dazu ein Dentalofen mit einem Trockensensor bekannt, der die Temperatur des Objekts misst und nach Überschreiten einer Auslösetemperatur, die der Siedetemperatur einer Feuchtigkeit entspricht ein Brennen des Objekts freigibt.

Darüber hinaus ist aus der Druckschrift DE 196 06 493 C1 ein Verfahren zum Brennern von dentalkeramischem Material und ein Brennofen hierfür bekannt, bei dem es darum geht, die Brenndauer möglichst genau zu erfassen.

In neuerer Zeit sind alternative Lösungen vorgestellt worden, gemäß welchen mit einem Temperatursensor die Temperatur des Dentalrestaurationsteils bestimmt wird und beim Erreichen einer bestimmten Temperatur der eigentliche Brennvorgang gestartet wird. Hintergrund ist, dass sich hierdurch das Temperaturplateau der Verdampfungswärme bestimmen lässt und für die Steuerung ausnutzen lässt.

Aus der Druckschrift US 2011/0114526 A1 ist ein Vakuumofen bekannt, der eine Wärmeverteilungsscheibe aufweist, die zum Anordnen in einer Brennkammer auf einem Sockel angeordnet ist, der mit dem Objekt auf der Wärmeverteilungsscheibe von unten nach oben in eine Öffnung im Boden des Vakuumofens einschiebbar ist.

Aus der Druckschrift DE 10,2006 032 655 A1 ist ein Dentaltechnikofen und ein Verfahren zur Positionssteuerung einer Verschlussplatte an dem Dentaltechnikofen bekannt. Eine im Haubenboden angeordnete Öffnung ermöglicht einen Sockel mit dem Objekt von unten in die Brennkammer einzuschieben, wobei die Verschlussplatte den Sockel trägt und temperaturabhängig unterschiedlich positionierbar ist.

Bekanntlich hängt jedoch der Siedepunkt einer Flüssigkeit stark von dem bestehenden Druck ab. Es hat sich jedoch außerdem gezeigt, dass bei einem Dentalbrennofen oder Dentalpressofen in manchen Fällen ein fehlerhafter Brennvorgang oder Pressvorgang stattfindet, obwohl die ermittelten Signale des Temperatursensors hierauf nicht hindeuten.

Daher liegt der Erfindung die Aufgabe zugrunde, ein Verfahren zur Bestimmung der Feuchtigkeit in einem Dentalofen zu schaffen, bei dem unter Verwendung der vorhandenen Sensoren wie Temperatursensor und Drucksensor das Vorliegen eines Fehlerfalls besser bestimmbar ist.

Diese Aufgabe wird erfindunggemäß durch Anspruch 1 gelöst. Vorteilhafte Weiterbildungen ergeben sich aus den Unteransprüchen.

Erfindungsgemäß besonders günstig ist es, dass durch die erfindungsgemäße Ausnutzung von Druck- und/oder Temperatursensoren sich etwaige Probleme erfindungsgemäß ermitteln lassen. So lässt sich beispielsweise erfindungsgemäß aus einer Verzögerung des Temperaturanstiegs oder einer Absenkung der Temperatur bei der Zufuhr von Heizleistung bei einer Temperatur, die deutlich oberhalb der Siedetemperatur der enthaltenen Feuchtigkeit bei dem Solldruck liegt, implizit darauf schließen, dass der Druck in dem Dentalofen nicht dem Solldruck entspricht.

Diese ermittelte, einem bestimmten Druck entsprechende Verdampfungstemperatur lässt sich nun korrelieren mit einem tatsächlich gemessenen Druck, und aus einer Abweichung lässt sich ein Fehlersignal ableiten. Umgekehrt lässt sich basierend auf einem mit kalibriertem Drucksensor gemessenen Druck aus der Verzögerung des Temperaturanstiegs und/oder einer Absenkung der Temperatur auf den bestehenden Dampfdruck aufgrund der Feuchtigkeit in dem Dentalrestaurationsteil und/oder in der Wärmedämmschicht des Dentalofens schließen und basierend hierauf die Steuerung des Dentalofens vornehmen. Die insofern vorgenommene Feuchtebestimmung lässt auch eine quantitative Abschätzung zu, denn das Ausmaß der Temperaturabsenkung bzw. der Verzögerung des Temperaturanstiegs entspricht der Verdampfungswärme der Feuchtigkeit.

Auch wenn hier schwerpunktmäßig Wasser als die betrachtete Feuchtigkeit angesehen wird, so dass der Dampfdruck von Wasser der Feuchtbestimmung zugrundeliegt (also beispielsweise ein Dampfdruck von 123 mbar bei 50 °C bzw. ein Dampfdruck von 1013 mbar bei 100 °C), versteht es sich, dass anstelle dessen auch das Verdampfen von Polymeren bei aus Kompositmaterialien bestehenden Dentalrestaurationsteilen mit deren entsprechender Siedetemperatur oder Sublimationstemperatur erfindungsgemäß einbezogen werden kann.

Erfindungsgemäß ist es günstig, wenn die Ausgangssignale der bestehenden Sensoren wie Temperatursensor und Relativdrucksensor bzw. Absolutdrucksensor miteinander kombiniert werden und basierend hierauf während der Heizung durch die Entwicklung der Messgrößen der Fehlerzustand des Dentalofens erfasst wird. Wenn beispielsweise die Temperaturabsenkung bei einem Unterdruck von 20 mbar oder 50 mbar zu signifikant ausfällt, wird auf eine Feuchtigkeit im Gesamtsystem geschlossen, so dass der Ofen einem speziellen Trocknungsprozess ohne Brennzyklus unterzogen wird. Wenn andererseits der Druck nicht in der gewünschten Weise absinkt, kann auf eine Undichtigkeit des Unterdruckraums, oder gegebenenfalls auf einen Pumpendefekt geschlossen werden. Diese Fehlersignale können auch miteinander kombiniert werden, nachdem die Temperatur/Dampfdruck-Kurve bei einem vorgegebenen Druck eine bestimmte Siedetemperatur vorgibt.

Erfindungsgemäß günstig ist es, wenn zum Trocknen des Dentalrestaurationsteils in dem Dentalofen Unterdruck in diesem erzeugt wird, der beispielsweise 50 mbar, 30 mbar oder sogar 20 mbar betragen kann und während des Anliegens dieses Unterdrucks eine Aufheizung zum Trocknen vorgenommen wird, wobei die sich ergebenden Temperaturrampen oder -stufen bzw. sogar Temperaturreduktionen erfasst werden.

In vorteilhafter Ausgestaltung ist diese Entfeuchtung in den eigentlichen Brennzyklus, der ein Sintern bei Atmosphärendruck umfasst, integriert. Besonders günstig ist es dann, dass dann ein separates Entfeuchtungsprogramm vermeidbar ist, was erhebliche Kosten-, Energie- und Zeitersparnisse mit sich bringt.

Erfindungsgemäß ist ein Thermensensor innerhalb der Brennkammer angeordnet. Bei einer plötzlichen Änderung des Temperaturverlaufs aufgrund der veränderten Wärmeleitung und damit dann Dampfkonvektion lässt sich die Feuchtigkeit auch qualitativ erfassen.

Gleiches gilt bei Erfassung über einen Drucksensor, der eine Druckabsenkung durch Transporteffekte und Kondensationseffekte der Feuchtigkeit an der Gehäusewand erfasst und hierdurch ebenfalls quantitativ - oder gewünschtenfalls qualitativ - eine Erfassung und Bestimmung der Feuchtigkeit erlaubt.

In vorteilhafter Ausgestaltung der Erfindung ist der Dentalofen, der als Brennofen oder als Pressofen ausgebildet sein kann, welche beiden Öfen, was die Heizung und die hiermit zusammenhängenden Gesichtspunkte angeht, als zueinander äquivalent anzusehen sind, einen Temperatursensor aufweisen, der in den Brennraum hineinragt. Sowohl die Wärmedämmschicht des Dentalofens als auch die Dentalrestaurationsteile selbst oder gegebenenfalls - bei einem Pressofen - die eingebrachte Muffel weisen eine Restfeuchte auf, allein aufgrund der hygroskopen Eigenschaften der Wärmedämmmaterialien bzw. Keramiken bzw. von Gips.

In erfindungsgemäß vorteilhafter Ausgestaltung wird der Ofen unter Unterdruck gesetzt und die Temperatur wird mit konstanter Heizleistung erhöht. Hierdurch verdampft die in der Wärmedämmschicht bestehende Feuchtigkeit, oder gegebenenfalls beispielsweise auch die Feuchtigkeit in der Muffel. Hierdurch entsteht Konvektion, und die Konvektionsströme treffen auch den Temperatursensor, der in der Brennkammer angeordnet ist, beispielsweise im oberen Bereich der Brennkammer. Der aufsteigende Wasserdampf führt zur Kühlung, so dass die gemessene Temperatur durch die Verdampfungswirkung der Feuchtigkeit sogar abgesenkt wird.

Wenn die Temperaturabsenkung ein vorgegebenes Maß übersteigt, lässt sich auf ein entsprechend große Feuchtigkeit in der Brennkammer schließen.

Wenn eine zu große Verdampfungswärme entsprechend zu großen Konvektionsströmen festgestellt wird, lässt sich in einer besonderen Ausgestaltung ein Entfeuchtungsprogramm starten, das in weiterer Ausgestaltung in den Brennzyklus integriert wird.

Hierzu wird bei Feststellung der Herabsetzung des Siedepunkts der Feuchtigkeit, der einem vorgegebenen Restdruck entspricht, beispielsweise 100 mbar, die Temperatur für eine vorgegebene Zeitdauer nicht weiter erhöht. Um dies zu erreichen, wird die Heizleistung entweder reduziert oder ganz abgeschaltet.

Diese Temperaturabsenkung wird im Rahmen der vorliegenden Beschreibung als Untertemperaturschwinger bezeichnet und lässt Rückschlüsse auf die Menge der vor der Anwendung des erfindungsgemäßen Verfahrens in dem Dentalofen vorhandenen Feuchtigkeit zu.

In weiterer Ausgestaltung der Erfindung wird die Brennkammer auf einen vorgegebenen Unterdruck gebracht, beispielsweise 150 mbar. Dieser Druck wird zunächst geregelt konstant gehalten, und es wird Heizleistung an die Heizspirale des Dentalofens angelegt. Die im Inneren der Brennkammer gemessene Temperatur ist regelmäßig deutlich höher als die Temperatur in der Wärmedämmungsschicht des Dentalbrennofens. Diese besteht aus beliebigem geeigneten Material, beispielsweise einer Keramik, und hat einen sehr großen Temperaturgradienten. Das bedeutet andererseits, dass bei Umgebungsdruck die Temperatur im Inneren der Wärmedämmung brennkammerseitig wesentlich höher als 100 °C sein muss, um ein mindestens nahe zu vollständiges Verdampfen der Feuchtigkeit in der Wärmedämmschicht zu erreichen.

Bei der erfindungsgemäßen Ausgestaltung mit dem Anlegen von Unterdruck lässt sich diese Temperatur nun deutlich Absenken. Bei einem Restdruck von 50 mbar beträgt die Verdampfungstemperatur von Wasser etwa 33 °C. Diese Temperatur liegt etwas über der typischen Raumtemperatur, auf der sich die Außenwand des Dentalofens befindet. Beim Aufheizen der Brennkammer über die Heizspirale wird sich daher auch bei einem großen Temperaturgradienten ein Temperaturverlauf in der Wärmedämmung einstellen, der zum allergrößten Teil oberhalb der Siedetemperatur bei dem gewählten Unterdruck von 50 mbar liegt. Beim Verdampfen dieser überwiegenden Masse der Feuchtigkeit aus der Wärmedämmschicht des Dentalofens wird der erfindungsgemäße Untertemperaturschwinger eingeleitet, und das Durchlaufen des diesbezüglichen Temperaturprofils zeigt an, dass der Dentalofen nun für einen Brennzyklus oder Presszykluss bereit ist.

In weiterer vorteilhafter Ausgestaltung ist es vorgesehen, den Druckverlauf bei der Druckmessung im Inneren des Ofens zu erfassen. Hierzu ist in einer ersten Ausgestaltung ein Aufheizen bei Atmosphärendruck vorgesehen. Die Dichtung am Übergang zwischen Ofenkopf und -fuß ist als Einwegventil ausgebildet, so dass entstehender Überdruck im Ofeninnenraum entweicht. Dies erfolgt zunächst beim Aufheizen aufgrund des Dampfdrucks. Zunächst entsteht hierbei ein leichter Überdruck im Ofeninnenraum, basierend auf dem Strömungswiderstand der als ein Ventil ausgebildeten Dichtung.

Es besteht ein hoher Temperaturgradient innerhalb der Wärmedämmschicht des Ofens, und es finden kontinuierlich Kondensations- und Verdampfungsvorgänge bei Luftbewegung innerhalb der Wärmedämmschicht statt. Die Luft bewegt sich in einer Kreisringbewegung, wobei sie in der Brennkammer aufsteigt, durch die Wärmedämmschicht oben nach außen gelangt, an der Ofenwand entlang nach unten strömt und dann wieder durch die Wärmedämmschicht hindurch nach innen zur Brennkammer. Wenn die Gehäusewand deutlich kühler als 100 °C ist - wie es typischerweise der Fall ist, beispielsweise 60 °C, entsteht bei Atmosphärendruck eine Kondensationswirkung für die Feuchtigkeit an dieser Stelle, was zu einem Sinken des Dampfdrucks und damit zu einem Absinken des gemessenen Drucks, einem hier so genannten Unterdruckschwinger, führt. Dessen Größe hängt von der Menge der Feuchtigkeit im Brennraum ab.

Auch dieser Unterdruckschwinger lässt sich daher für die Bestimmung der Feuchtigkeit heranziehen.

In vorteilhafter Ausgestaltung ist es nicht nötig, dass die Ofenkopfwand auf Raumtemperatur ist; sie kann beispielsweise auch auf 60 °C sein, einer Temperatur, die sich im Dauerbetrieb des Ofens einstellen kann. Auch hier lässt sich über die Druckabfallerfassung eine Feuchtigkeitsbestimmung realisieren.

Weitere Vorteile, Einzelheiten und Merkmale ergeben sich aus der nachfolgenden Beschreibung zweier Ausführungsbeispiele der Erfindung anhand der Zeichnung.

Es zeigen:
- Fig. 1: eine schematische Ansicht eines erfindungsgemäßen Dentalofens in einer Ausführungsform;
- Fig. 2: eine Temeperaturkurve des erfindungsgemäßen Dentalofens bei Anwendung des erfindungsgemäßen Verfahrens; und
- Fig. 3: eine Druckkurve des erfindungsgemäßen Dentalofens bei Anwendung des erfindungsgemäßen Verfahrens.

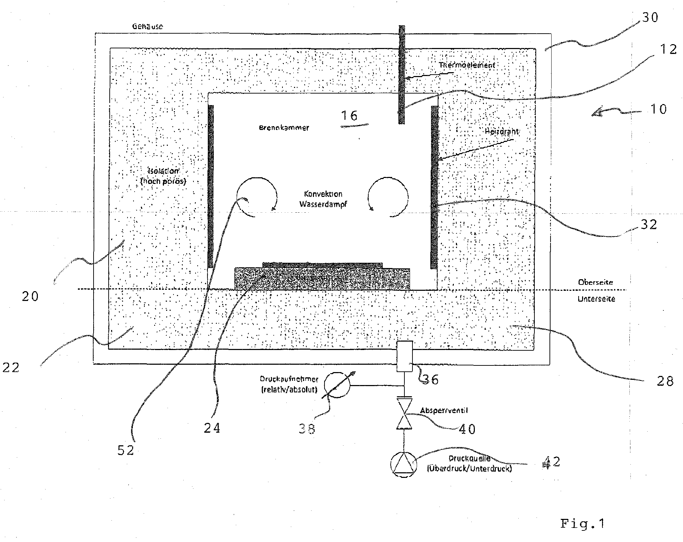

In Fig. 1 ist ein erfindungsgemäßer Dentalofen 10 schematisch dargestellt. Er weist einen Temperatursensor 12 auf, der beispielsweise als Thermoelement ausgebildet ist. Der Temperatursensor ist mit seinem Erfassungsbereich im oberen Fünftel einer Brennkammer 16 angeordnet, und zwar etwa gleich weit von der Decke der Brennkammer und der Wand der Brennkammer entfernt.

Der Dentalofen weist einen Ofenkopf 20 und einen Ofenfuß 22 auf. Diese sind in an sich bekannter Weise voneinander trennbar, indem der Ofenkopf 20 angehoben und nach Anheben leicht schräg verschwenkt werden kann, um einen freien Zugang zur Brennkammer 16 zu ermöglichen.

Alternativ kann auch der Ofenkopf 20 feststehend und der Ofenfuß 22 verfahrbar ausgebildet sein, was allerdings Erschütterungen des Dentalmaterials mit sich bringt, wenn der Ofenfuß 22 verfahren wird.

Das Dentalmaterial ist auf einem Brenngutträger 24 gelagert, der auf dem Ofenfuß 22 liegt.

Sowohl der Ofenfuß 22 als auch der Ofenkopf 20 sind mit einer recht dicken Wärmedämmschicht 26 und 28 versehen, die ein Gehäuse 30 von der Brennkammer 16 trennt. An der Innenseite der Wärmedämmschicht 26, der Brennkammer 16 benachbart, ist eine Ofenheizung 32 ausgebildet angeordnet.

In einer modifizierten Ausgestaltung ist die Ofenheizung 32 nicht auf der Innenseite der Wärmedämmschicht 26 ausgebildet, sondern der Brennkammer 16 benachbart in die Wärmedämmschicht 26 integriert.

Am Ofenfuß 22 ist eine das Gehäuse 32 durchtretende Druck/Unterdruckleitung 36 angebracht. Die Druck/Unterdruckleitung 36 ist mit einem Drucksensor 38 verbunden. Ferner ist ein Absperrventil 40 vorgesehen, das eine Druckquelle 42 von der Druck/Unterdruckleitung trennt.

Bei geschlossenem Absperrventil bleibt der Dentalofen 10 auf dem Druck, wie er von dem Drucksensor 38 gemessen wird. Die Wärmedämmschicht 28 ist porös, so dass in der Brennkammer 16 der gleiche Druck herrscht wie in der Druck/Unterdruckleitung 36.

Beim Einschalten der Druckquelle, die als Pumpe ausgebildet sein kann, und beim Öffnen des Absperrventils 40, wird der Druck in der Brennkammer 16 verändert, und zwar je nach Pumprichtung zu Unterdruck hin oder zum Überdruck hin.

In vorteilhafter Ausgestaltung weist das Gehäuse 30 an der Trennstelle zwischen Ofenkopf 20 und Ofenfuß 22 eine Dichtung auf. Diese ist nach außen weisende Dichtlippe ausgebildet. Etwaiger Überdruck in der Brennkammer 16 gegenüber dem Umgebungsdruck entweicht durch diese Dichtung, während sie gegen Unterdruck in der Brennkammer 16 sicher verschließt.

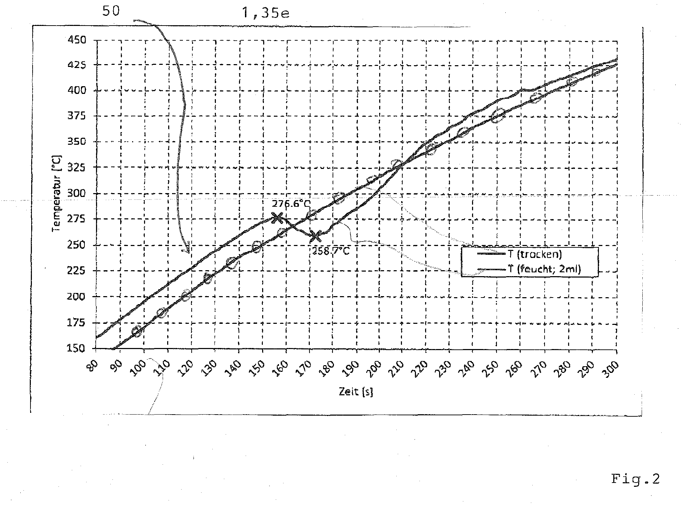

Aus Fig. 2 ist ein erfindungsgemäßes Betriebsverfahren eines erfindungsgemäßen Dentalofens ersichtlich. In einem ersten Vergleichsversuch wird der Ofen mit einer vorgegebenen konstanten Heizleistung erwärmt, wobei sich eine Trockentemperaturkurve T_{trocken} gemäß 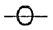 einstellt. Die Temperatur wird hierbei mit dem Temperatursensor 12 gemessen. Hier handelt es sich um einen trockenen Ofen, also einen solchen, der entfeuchtet wurde oder der in beliebiger anderer Weise sowohl eine trockene Wärmedämmschicht als auch gegebenenfalls trockenes Dentalrestaurationsmaterial aufweist.

In einem zweiten Versuch wird der gleiche Ofen im feuchten Zustand, das heißt, nach Zufuhr von 2 ml Wasser, gemessen. Im Bereich 50 liegt die Temperaturkurve T_{feucht} - höher als die Temparaturkurve T_{trocken} 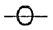 ; dies liegt darin begründet, dass die Ausgangstemperatur bei diesem Versuch höher war.

Bis zu dem Zeitpunkt 155 sek. steigt die Temperaturkurve T_{feucht} parallel mit der Temperaturkurve T_{trocken} im Wesentlichen linear an; zu diesem Zeitpunkt ist eine Temperatur von etwa 275 °C erreicht.

Trotz weiter konstant zugeführter Heizleistung sinkt die gemessene Temperatur gemäß der Temperaturkurve T_{feucht} dann bis etwa 175 sek. ab, und zwar auf einen Minimalwert knapp unter 260 °C, also um mehr als 15 °C.

Zur Erklärung sind hierzu die Konvektionsströme für die Konvektion von Wasserdampf 52 in Fig. 1 eingezeichnet. An der Ofenheizung 32 verdampft bestehende Feuchtigkeit. Nachdem der Temperatursensor 12 recht weit oben angeordnet ist, wird dieser von dem aufsteigenden Wasserdampf getroffen, so dass die gemessene Temperatur sinkt, nachdem der Wasserdampf einen Kühlungseffekt hat.

Es wurden mehrere Messreihen durchgeführt, und stets ergab sich, dass der genannte Kühleffekt lediglich dann auftrat, wenn sich Feuchtigkeit im System bestand.

Hieran anschließend, also ab etwa 175 sek., steigt die gemessene Temperatur wieder an, und bei etwa 210 sek. - in der dargestellten Vergleichsmessung - erreicht die Temperaturkurve T_{feucht} erneut die Temperaturkurve T_{trocken}. Sie verläuft dann in etwas geringerem Abstand oberhalb der Temperaturkurve T_{trocken} als im unteren Temperaturbereich 50, was der Verdampfungswärme der verdampften Feuchtigkeit entspricht.

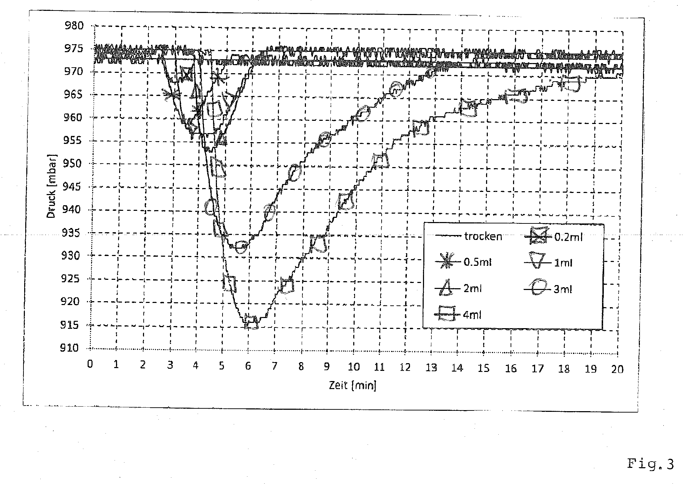

In einer weiteren Ausführungsform, für die auf Fig. 3 Bezug genommen wird, werden unterschiedliche Mengen von Wasser als Feuchtigkeit in den erfindungsgemäßen Dentalofen eingebracht, und es wird der Druck an dem Drucksensor 38 gemessen. Ohne Feuchtigkeit liegt der gemessene Druck zwischen 970 und 975 Millibar. Bei den Vergleichsversuchen wurde stets mit der gleichen zugeführten Heizleistung pro Zeit gearbeitet, und die Versuche erfolgten bei einer Temperatur des Gehäuses 30, also der Wand des Ofenkopfes 20, die je gleich niedrig war.

Bereits wenn lediglich eine kleine Menge von 0,2 ml Feuchtigkeit eingebracht wurde, ergibt sich bei etwa 3 min ein kleiner Unterdruckschwinger auf etwa 968 mbar, der aber nach kurzer Zeit, also vor der Minute 4, wieder verschwand.

Wesentlich deutlicher war der Unterdruckschwinger bei der Zufuhr von 0,5 ml Feuchtigkeit; hier sank der Druck auf etwa 960 mbar und stieg auf den Nennwert etwa bei Minute 5 wieder an.

Wie aus der Kurvenschar gemäß Fig. 3 ersichtlich ist, fand bei zunehmender Feuchtigkeit ein je stets größerer Unterdruckschwinger statt, beispielsweise bei einer Feuchtigkeitsmenge von 4 ml auf etwa 915 mbar, welcher Unterdruckschwinger auch nach 20 min noch nicht vollständig abgeklungen war.

Begründbar ist dieser Unterdruckschwinger je durch die Konderisation der Feuchtigkeit an der - relativ kühlen - Wand des Ofenkopfes 20. Die innere Atmosphäre in der Brennkammer ist übersättigt, und die Menge an Feuchtigkeit in der Brennkammer ist entscheidend für die Größe dieses Kondensationseffekts. Der hier vorliegende Prozess verläuft isochore gemäß dem zweiten Gesetz von Gay-Lussac. Demnach ist bei konstantem Volumen in einem abgeschlossenen System der Druck direkt proportional zur herrschenden Temperatur.

Der Untertemperaturschwinger findet insofern seine Entsprechung im Unterdruckschwinger gemäß Fig. 3, wobei es sich versteht, dass durch die Temperaturzunahme entstehender Überdruck in der Brennkammer durch die zuvor beschriebene Dichtung stets entweicht, so dass lediglich Unterdruck, aber kein Überdruck von dem Drucksensor 38 erfasst wird.

## Patentansprüche

1. Verfahren zur Bestimmung der Feuchtigkeit in einem Dentalofen (10), welcher Dentalofen (10) ein einen Brennraum umgebendes Heizelement aufweist, das von einem Wärmedämmkörper umgeben ist, wobei ein Temperatursensor (12) die Temperatur in der Brennkammer (16) oder dem Dentalofen oder dem Mantel misst, und wobei der Temperatursensor (12) in oder an dem Wärmedämmkörper gelagert ist, und wobei der Dentalofen (10) eine Steuervorrichtung zur Steuerung mindestens des Aufheizvorgangs des Dentalofens (10) aufweist, und wobei die Brennkammer (16) mit einer Unterdruckquelle (42), verbunden ist,
**dadurch gekennzeichnet, dass** ein Drucksensor (38) den Druck in der Brennkammer (16) oder dem Dentalofen misst, und dass beim Aufheizen der geschlossenen Brennkammer (16) über einen Siedepunkt einer Feuchtigkeit wie beispielsweise Wasser die durch die Verdampfungswärme und/oder durch einen Konvektionsstrom der in dem Dentalofen (10) befindlichen Feuchtigkeit entstehende Verzögerung des Temperaturanstiegs und/oder die Absenkung der Temperatur von der Steuervorrichtung über den Temperatursensor (12) erfasst und für die Steuerung des Dentalofens (10) verwendet wird.

2. Verfahren nach Anspruch 1, **dadurch gekennzeichnet, dass** über die Verzögerung des Temperaturanstiegs und/oder die Absenkung der Temperatur die Verdampfungswärme und/oder Konvektionsströme und damit die bestehende Feuchtigkeit auch quantitativ und qualitativ erfasst wird und oberhalb vorgegebener Größen ein Fehlersignal ausgegeben wird.

3. Verfahren nach einem der vorhergehenden Ansprüche, **dadurch gekennzeichnet, dass** die Steuervorrichtung beim Erkennen einer Verzögerung des Temperaturanstiegs des Dentalofens entsprechend einer Verdampfungswärme und/oder Konvektionsströme als Maß für die Masse der Feuchtigkeit ein Entfeuchtungsprogramm auslöst, bei welchem der Dentalofen (10) frei von Dentalrestaurationsmaterial zur Verdunstung der Restfeuchte aufgeheizt wird und die Restfeuchte aus dem Dentalofen (10) abgesaugt oder abgegeben wird, oder ein Hinweis auf ein Entfeuchtungsprogramm ausgegeben wird.

4. Verfahren nach einem der vorhergehenden Ansprüche, **dadurch gekennzeichnet, dass** der Dentalofen (10) während des Aufheizens oder vor dem Aufheizen unter Unterdruck gesetzt wird, und zwar auf einen Restdruck von weniger als 600mbar (600hPa), oder weniger als 400mbar (400hPa) oder 50mbar (50hPa) entsprechend einer Herabsetzung des Siedepunkts der Feuchtigkeit, und dass bei Annäherung an den Siedepunkt oder etwas oberhalb des Siedepunkts die Steuervorrichtung mindestens ein Temperaturplateau steuert, also den Dentalofen (10) so steuert, dass für einen vorgegebenen Zeitabschnitt die Temperatur nicht weiter oder nur stetig weiter erhöht wird, und dass bei Erfassung einer Temperaturabsenkung eine Feuchtigkeitsmenge detektiert wird.

5. Verfahren nach einem der vorhergehenden Ansprüche, **dadurch gekennzeichnet, dass** der Dentalofen (10) vorab hinsichtlich der Temperaturabsenkung beim Aufheizen aufgrund der Verdampfungswärme der Feuchtigkeit im Wärmedämmkörper, in der Brennkammer (16) und in den Leitungen zur Druckquelle (42) hin getestet wird und beim Erfassen einer zu großen Temperaturabweichung oder eine Temperaturabweichung bei einer zu hohen oder zu tiefen Temperatur ein Fehler wie ein Pumpendefekt, ein Dichtheitsproblem oder eine Feuchtigkeit im Gesamtsystem erfasst wird.

6. Verfahren nach einem der vorhergehenden Ansprüche, **dadurch gekennzeichnet, dass** der Ort der Anbringung des Erfassungsbereichs des Temperatursensors (12) vorab experimentell bestimmt und nach der Signifikanz des Untertemperaturschwingers, also der Temperaturabsenkung oder Reduzierung der Temperaturerhöhung im Temperaturverlauf, in Bezug auf die Höhe des Erfassungsbereichs innerhalb des Dentalofens (10) und den Abstand von dem Heizelement bestimmt wird,.

7. Verfahren nach einem der vorhergehenden Ansprüche, **dadurch gekennzeichnet, dass** die Steuervorrichtung den von dem Temperatursensor (12) gemessenen Temperaturverlauf mindestens ab der druckabhängigen Siedetemperatur der Feuchtigkeit erfasst und mindestens teilweise abspeichert und aus der Größe der Unterdruckänderung die Menge der im Dentalbrennofen (12) enthaltenden und verdunstenden Feuchtigkeit berechnet wird.

8. Verfahren nach einem der vorhergehenden Ansprüche, **dadurch gekennzeichnet, dass** der Dentalofen (10) mit einer Unterdruckquelle ausgerüstet ist, und beim Aufheizen vor Erreichung der Siedetemperatur der Feuchtigkeit die Brennkammer (16) auf einen konstanten Unterdruck durch Schließen eines Absperrventils (40) oder durch Nachregelung des Unterdrucks über einen Druckfühler, der die Unterdruckquelle regelt, gebracht wird.

9. Verfahren nach Anspruch 9, **dadurch gekennzeichnet, dass** die Erfassung des Untertemperaturschwingers zwischen zwei Brennzyklen erfolgt.

10. Verfahren zur Steuerung eines Dentalofens (10), der ein Heizelement, das von einem Wärmedämmkörper umgeben ist, und eine Steuervorrichtung aufweist, die das Heizelement steuert und mit einem Temperatursensor (12) verbunden ist, der einen Erfassungsbereich in einer Brennkammer (16) aufweist, die in dem Dentalofen (10) ausgebildet ist, wobei der Dentalofen (10) mit einer Dichtung an dem Gehäuse (30) ausgestattet ist, und mit einem Druckfühler, der den Druck innerhalb des Gehäuses (30) des Dentalofens (10) misst, **dadurch gekennzeichnet, dass** beim Aufheizen des Dentalofens (10) über das Heizelement der Druckfühler den Innendruck in dem Ofen misst und oberhalb einer Siedetemperatur der in dem Dentalofen (10) befindlichen Feuchtigkeit einer Veränderung des Drucks bei zunehmender Temperatur um einen vorgegebenen Wert und für eine vorgegebene Temperaturerhöhung erfasst, und dass die Steuervorrichtung aus der Größe der Veränderung den Feuchtigkeitsanteil der Luft im Innenraum des Dentalofens (10) festleg

11. Verfahren nach einem der vorhergehenden Ansprüche, **dadurch gekennzeichnet, dass** das Dentalrestaurationsteil im Dentalofen (10) unter Unterdruck gesetzt wird und dass die Steuervorrichtung über die Erfassung der Größe der Temperaturveränderung bei der Verdampfung der Feuchtigkeit und der sich hieraus ergebenden Verdampfungswärme oder dem hierdurch erzeugten kühlenden Konvektionsstrom den Feuchtegehalt erfasst.

12. Dentalofen, mit einem Heizelement, das eine Brennkammer (16) umgibt und seinerseits von einem Wärmedämmkörper umgeben ist, mit einem luftdichten Gehäuse (30) und einem Temperatursensor (12), der mit seinem Erfassungsbereich in dem Dentalofen (10) an geordnet ist, sowie mit einem Träger für die Aufnahme von Dentalrestaurationsteilen in der Brennkammer (16), wobei an der Innenseite einer Wärmedämmschicht 26 benachbart zu der Brennkammer (16) eine Ofenheizung (32) ausgebildet ist und wobei der Dentalofen einen Ofenkopf (20) und einen Ofenfuß (22) aufweist, wobei der Ofenkopf (20) angehoben werden kann,
**dadurch gekennzeichnet, dass**
das Gehäuse (30) an der Trennstelle zwischen Ofenkopf (20) und Ofenfuß (22) eine Dichtung mit einer nach außen weisende Dichtlippe aufweist, und wobei eine Steuervorrichtung ausgebildet ist, einen Brennzyklus des Dentalofens (10) zu steuern und zu regeln, und wobei die Steuervorrichtung ausgebildet ist beim Aufheizen des Dentalofens (10) eine Verlangsamung der Aufheizung und/oder eine Absenkung der Temperatur trotz abgegebener Heizleistung zu erfassen und aus der Größe der Temperaturabweichung die Feuchtigkeit in dem Dentalofen (10) zu bestimmen, wobei der Ofenkopf (20) den Temperatursensor (12) aufweist, und wobei der Temperatursensor (12) innerhalb der Brennkammer (16),in einem Erfassungsbereich in dem Konvektionsströme erfassbar sind, angeordnet ist.

13. Dentalofen nach Anspruch 12, **dadurch gekennzeichnet, dass** das Gehäuse (30) des Dentalofens (10) mit einer Leitung verbunden ist, die ihrerseits mit einer Unterdruckquelle (42), verbunden ist, weiter **dadurch gekennzeichnet, dass** ein Drucksensor (38) mit der Leitung und/oder der Brennkammer (16) verbunden ist und dass der Drucksensor (38) mit der Steuervorrichtung verbunden ist.

14. Dentalofen nach Anspruch 12 oder Anspruch 13 mit einem Heizelement, das eine Brennkammer (16) umgibt und seinerseits von einem Wärmedämmkörper umgeben ist, mit einem luftdichten Gehäuse (30), einem Drucksensor (38) und einem Temperatursensor (12), der mit seinem Erfassungsbereich in den Dentalofen (10) gerichtet ist, sowie mit einem Träger (24) für die Aufnahme von Dentalrestaurationsteilen in der Brennkammer (16), wobei eine Steuervorrichtung ausgebildet ist, einen Brennzyklus des Dentalofens (10) zu steuern oder zu regeln, **dadurch gekennzeichnet, dass** die Steuervorrichtung ausgebildet ist, eine beim Aufheizen des Dentalofens (10) hervorgerufene Druckänderung zu erfassen und aus der Größe der Druckänderung die Feuchtigkeit in dem Dentalofen (10) zu bestimmen.

## Claims

1. A method for determining the moisture In a dental furnace (10), which dental furnace (10) comprises a heating element surrounding a combustion chamber and being surrounded by a heat insulating body, a temperature sensor (12) measuring the temperature in the combustion chamber (16) or the dental furnace or the sheath, and wherein the temperature sensor (12) is mounted in or on the thermal insulation body, and wherein the dental furnace (10) comprises a control device for controlling at least the heating process of the dental furnace (10), and wherein the combustion chamber (16) is connected to a vacuum source (42),
**characterized in that** a pressure sensor (38) measures the pressure in the combustion chamber (16) or the dental furnace, and **in that**, when heating the closed combustion chamber (16) above a boiling point of a molsture such as water, for example, the delay in the rise in temperature resulting from the evaporation heat and/or from a convection current of the moisture present in the dental furnace (10) and/or the lowering of the temperature is detected by the control device via the temperature sensor (12) and used for the control of the dental furnace (10).

2. The method according to claim 1, **characterized in that** the heat of evaporation and/or the convection currents, and thus the existing moisture, is also quantitatively and qualitatively detected through the delay of the temperature rise and/or the lowering of the temperature and an error signal Is output above predetermined magnitudes.

3. The method according to one of the preceding claims, **characterised in that** the control device initiates a dehumidification routine upon when detecting a delay in temperature rise of the dental oven corresponding to a heat of evaporation and/or convection currents as a measure of the amount of moisture, in which dehumidification routine the dental oven (10) is heated free of dental restorative material to evaporate residual moisture and the residual moisture is extracted or discharged from the dental oven (10), or an indication to a dehumidification routine is being output.

4. The method according to one of the preceding claims, **characterized in that** the dental furnace (10) is pressurized during heating or prior to heating to a residual pressure of less than 600 mbar (600 hPa), or less than 400 mbar (400 hPa), or less than 50mbar (50hPa), respectively, corresponding to a reduction in boiling point of the moisture, and **in that**, when approaching the boiling point or slightly above the boiling point, the control device controls at least one temperature level, i.e. control of the dental oven (10) Is such that the temperature is not increased any further or only continuously for a predetermined period of time, and **In that**, when a temperature drop is detected, a quantity of moisture is detected.

5. The method according to one of the preceding claims, **characterized in that** the dental furnace (10) is tested beforehand with respect to temperature reduction during heating caused by the heat of evaporation of the moisture in the thermal Insulation body, In the combustion chamber (16) and in the ducts towards the pressure source (42) and, upon detection of a temperature deviation being too large or a temperature deviation being at a temperature too high or too low, a defect such as a pump defect, a tightness problem or any moisture in the overall system is detected.

6. The method according to one of the preceding claims, **characterized in that** the detection area installation location of the temperature sensor (12) is experimentally determined in advance and is determined according to the significance of the subtemperature oscillator, i.e. temperature reduction or reduction of the temperature increase in the temperature course, with respect to the height the detection area within the dental furnace (10) and the distance from the heating element.

7. The method according to one of the preceding claims, **characterized in that** the control device detects the temperature curve measured by the temperature sensor (12) at least starting from the pressure-dependent boiling temperature of the moisture and stores it at least partially, and the quantity of moisture contained and being evaporated in the dental furnace (12) is calculated from the magnitude of the change in negative pressure.

8. The method according to one of the preceding claims, **characterized In that** the dental furnace (10) is provided with a vacuum source and, when heating before reaching the boiling temperature of the moisture, the combustion chamber (16) is brought to a constant vacuum by closing a shut-off valve (40) or by readjusting the vacuum via a pressure sensor which controls the vacuum source.

9. The method according to claim 9, **characterized in that** detection procedure of the subtemperature oscillator occurs between two firing cycles.

10. A method for controlling a dental furnace (10) comprising a heating element surrounded by a heat insulating body and a control device controlling the heating element and being connected to a temperature sensor (12) having a detection area in a combustion chamber (16) formed in the dental furnace (10), the dental furnace (10) being provided with a seal on the housing (30) and with a pressure sensor measuring the pressure inside the housing (30) of the dental furnace (10), **characterized In that**, when heating the dental furnace (10) via the heating element, the pressure sensor measures the internal pressure In the furnace and, above a boiling temperature of the moisture present In the dental furnace (10), detecting a change In pressure as the temperature Increases by a predetermined value and for a predetermined temperature increase, and **in that** the control device determines the moisture content of the air in the Interior of the dental furnace (10) from the magnitude of said change.

11. The method according to one of the preceding claims, **characterized In that** the dental restoration part in the dental furnace (10) is sub-pressurized and **In that** the control device detects the moisture content by detecting the magnitude of the temperature change during evaporation of the moisture, and detects the magnitude of the heat of evaporation resulting therefrom or the cooling convection current generated.

12. A dental furnace, having a heating element which surrounds a combustion chamber (16) and in turn Is surrounded by a thermal insulating body, having an airtight housing (30) and a temperature sensor (12), which is arranged with its detection region being located within the dental furnace (10), and having a support for receiving dental restoration parts in the combustion chamber (16), wherein a furnace heater (32) Is formed on the inside of a thermal barrier layer 26 adjacent to the combustion chamber (16), and wherein the dental furnace comprises a furnace top (20) and a furnace base (22), wherein the furnace top (20) can be lifted, **characterized in that**
the housing (30) comprises a seal having a sealing lip facing outwards) at the separation point between the furnace top (20) and the furnace base (22), and wherein a control device is designed to control and regulate a firing cycle of the dental furnace (10), and the control device being designed, when heating the dental oven (10), to detect a deceleration in heating and/or reduction in temperature despite the heating power output and to determine the moisture in the dental oven (10) from the magnitude of temperature deviation, the oven top (20) having the temperature sensor (12), and the temperature sensor (12) being arranged inside the combustion chamber (16) in a detection region, where convection currents can be detected.

13. The dental furnace according to claim 12, **characterized in that** the housing (30) of the dental furnace (10) Is connected to a duct which jn turn is connected to a vacuum source (42), further **characterized in that** a pressure sensor (38) is connected to the duct and/or the combustion chamber (16), and **in that** the pressure sensor (38) Is connected to the control device.

14. The dental furnace according to claim 12 or claim 13, having a heating element which surrounds a combustion chamber (16) and in turn Is surrounded by a heat insulating body, having an airtight housing (30), a pressure sensor (38) and a temperature sensor (12), the detection region of which is directed into the dental furnace (10), and having a support (24) for receiving dental restoration parts In the combustion chamber (16), wherein a control device Is arranged to control or regulate a firing cycle of the dental furnace (10), **characterized in that** the control device is arranged to detect a pressure change caused during heating of the dental furnace (10) and to determine the moisture in the dental furnace (10) from the magnitude of the pressure change.

## Revendications

1. Procédure pour la détermination de l'humidité dans un four dentaire (10), où le four dentaire (10) présente un élément chauffant qui entoure une chambre de combustion qui est entouré d'un corps d'isolation thermique, où un capteur de température (12) mesure la température dans la chambre de combustion (16) ou le four dentaire ou la gaine et où la sonde de température (12) est montée dans ou sur le corps d'Isolation thermique, et où le four dentaire (10) dispose d'un dispositif de commande pour contrôler au moins le procédé de chauffage du four dentaire (10), et où la chambre de combustion (16) est relié à une source de dépression (42), **caractérisée en ce qu'**un capteur de pression (38) mesure la pression dans la chambre de combustion (16) ou le four dentaire et que lors de l'échauffement de la chambre de combustion fermée (16) au-dessus d'un point d'ébullition d'une humidité telle que par exemple, l'eau, le retard de la montée en température et/ou la baisse de la température d'une humidité se trouvant dans le four dentaire (10) due à la chaleur de vaporisation ou à un courant de convection est détectée par le dispositif de commande par le biais de la sonde de température (12) et utilisée pour commander le four dentaire (10).

2. Procédure selon la revendication 1, **caractérisée en ce que** par le retard de la montée en température et/ou la baisse de la température de la chaleur de vaporisation ou des courants de convection et ainsi l'humidité existante est détectée de façon quantitative ainsi que qualitative et un signal d'erreur est émis au-dessus de grandeurs prédéterminées.

3. Procédure selon l'une des revendications précédentes, **caractérisée en ce que** le dispositif de commande lorsqu'il détecte un retard de la montée en température du four dentaire correspondant à une chaleur de vaporisation et/ou des courants de convection comme une mesure de la masse de l'humidité, lance un programme de déshumidification, dans lequel le four dentaire (10) est chauffé sans matériau de restauration dentaire jusqu'à l'vaporisation de l'humidité et l'humidité résiduelle est aspirée ou évacuée du four dentaire (10), ou un avertissement est émis sur un programme de déshumidification.

4. Procédure selon l'une des revendications précédentes, **caractérisé en ce que** le four dentaire (10) est mis sous dépression pendant le réchauffement ou avant le réchauffement sur une pression résiduelle inférieure à 600mbar (600hPa), ou inférieure à 400mbar (400hPa) ou 50mbar (50hPa) correspondant à une baisse du point d'ébullition de l'humidité, et qu'à proximité du point d'ébullition ou au-dessus du point d'ébullition le dispositif de commande contrôle au moins un plateau de température, c'est à dire il contrôle le four dentaire (10) de telle manière que pour une période donnée la température ne monte plus ou monte juste constamment et que lors de la détection d'une réduction de la température un taux d 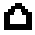 humidité est mesuré.

5. Procédure selon l'une des revendications précédentes, **caractérisée en ce que** le four dentaire (10) est testé préalablement par lors de l'échauffement rapport à la réduction de la température en raison de la chaleur de vaporisation de l'humidité dans le corps d'isolation thermique, dans la chambre de combustion (16), et dans les conduits vers la source de pression (42) et lorsqu'un écart de température trop grand ou un écart de température à une température trop élevée ou trop basse est détectée, une erreur telle un défaut de la pompe, un problème d'étanchéité ou d'humidité dans l'ensemble du système sera détectée.

6. Procédure selon l'une des revendications précédentes, **caractérisée en ce que** le lieu de l'installation de la zone de détection de la sonde (12) de température est déterminé préalablement de façon expérimentale et selon la signification du transducteur de basse température, c'est à dire la réduction de la température ou la réduction de l'augmentation de la température dans l'évolution de la température, est déterminée par rapport à la hauteur de la zone de détection dans le four dentaire (10) et la distance de l'élément chauffant.

7. Procédure selon l'une des revendications précédentes, **caractérisée en ce que** le dispositif de commande détecte et met en mémoire au moins partiellement l'évolution de la température mesurée par la sonde de température (12) au moins à partir de la température d'ébullition de l'humidité en fonction de la pression, et la quantité d'humidité contenue et se vaporisant dans le four dentaire (12) est calculée à partir de la grandeur du changement dans la dépression.

8. Procédure selon l'une des revendications précédentes, **caractérisée en ce que** le four dentaire (10) est équipé d'une source de dépression et lors de réchauffement avant d'atteindre la température d'ébullition de l'humidité la chambre de combustion (16) est ramené a une dépression constante en fermant une vanne d'arrêt (40) ou par l'ajustement de la pression négative par un capteur de pression qui régule la source de dépression.

9. Procédé selon la revendication 9, **caractérisée en ce que** la saisie du transducteur de basse température est réalisée entre deux cycles de combustion.

10. Procédure de commande d'un four dentaire (10), qui présente un élément chauffant qui est entouré d'un corps d'isolation thermique et d'un dispositif de commande qui contrôle l'élément chauffant et est relié à un capteur de température (12), qui présente une zone de détection dans une chambre de combustion (16), qui est formé dans le four dentaire (10), où le four dentaire (10) est équipé d'un joint sur le carter (30) et d'un capteur de pression qui mesure la pression dans le carter (30) du four dentaire (10), **caractérisée en ce que** lors de réchauffement du four dentaire (10) la sonde de pression mesure la pression dans le four par l'élément chauffant et, au dessus d'une température d'ébullition de l'humidité se trouvant dans le four dentaire (10), détecte un changement de pression lors de l'augmentation de la température à une valeur donnée de et pour un d'augmentation de température donnée et que le dispositif de commande définit la teneur en humidité de l'air à l'intérieur du four dentaire (10) à partir de la grandeur du changement.

11. Procédure selon l'une des revendications précédentes, **caractérisée en ce que** la pièce de restauration dentaire dans le four dentaire (10) est mise sous dépression et que le dispositif de commande en saisissant la grandeur du changement de la température lors de la vaporisation de l'humidité et de la chaleur de vaporisation résultante ou le courant de convection refroidissant ainsi généré saisit le taux d'humidité.

12. Four dentaire, avec un élément chauffant qui entoure une chambre de combustion (16) et à son tour est entouré par un corps d'isolation thermique, avec un carter (30) étanche à l'air et une sonde de température (12), qui est disposé avec sa zone de détection dans le four dentaire (10), ainsi qu'avec un support pour recevoir les pièces de restauration dentaire dans la chambre de combustion (16), où un chauffage du four (32) est configuré à l'intérieur d'une couche d'isolation thermique 26 adjacente à la chambre de combustion (16), et où le four dentaire présente une tête (20) et un pied de four (22), où la tête du four (20) peut être relevée, **caractérisé en ce que** à la hauteur du point de séparation entre la tête du four (20) et le pied du four (22) le carter (30) présente une lèvre d'étanchéité orientée vers l'extérieur, et où un dispositif de commande est formé, pour la commande et le réglage d'un cycle de cuisson du four dentaire (10), et où le dispositif de commande est configuré pour détecter un ralentissement de l'échauffement et/ou une réduction de la température malgré la puissance de chauffage fournie lors de réchauffement, et à partir de la grandeur de l'écart de température, pour détecter le taux de l'humidité dans le four dentaire (10), où la tête du four (20) présente la sonde de température (12), et où la sonde de température (12) est disposée à l'intérieur de la chambre de combustion (16), dans une zone de détection, dans laquelle des courants de convection peuvent être détectés.

13. Four dentaire selon la revendication 12, **caractérisé par le fait que** le carter (30) du four dentaire (10) est relié à un conduit, qui à son tour est relié à une source de dépression (42), **caractérisé en outre en ce qu'**un capteur de pression (38) est relié avec le conduit et/ou la chambre de combustion (16) et que le capteur de pression (38) est relié au dispositif de commande.

14. Four dentaire selon sa revendication 12 ou revendication 13 avec un élément chauffant qui entoure une chambre de combustion (16) et à son tour est entouré par un corps d'isolation thermique, avec un carter (30) étanche à l'air et une sonde de température (12), qui avec sa zone de détection est orientée dans le four dentaire (10) est, ainsi qu'avec un support (24) pour recevoir des pièces de restauration dentaire dans la chambre de combustion (16), où un dispositif de commande est formé, pour la commande et le réglage d'un cycle de cuisson du four dentaire (10), **caractérisé en ce que** le dispositif de commande est formé pour détecter un changement dans la pression engendrée lors de réchauffement du four dentaire (10) et à déterminer l'humidité dans le four dentaire (10) à partir de la grandeur du changement de pression.
